(19) Europäisches Patentamt
European Patent Office
Office européen des brevets

(11) **EP 3 447 442 A1**

(12) **EUROPEAN PATENT APPLICATION**
published in accordance with Art. 153(4) EPC

(43) Date of publication:
**27.02.2019 Bulletin 2019/09**

(51) Int Cl.:
***G01B 21/20*** (2006.01)

(21) Application number: **16904019.3**

(86) International application number:
**PCT/JP2016/066226**

(22) Date of filing: **01.06.2016**

(87) International publication number:
**WO 2017/208394 (07.12.2017 Gazette 2017/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation Chiyoda-ku Tokyo 100-8310 (JP)**

(72) Inventor: **MIURA, Mamoru Tokyo 100-8310 (JP)**

(74) Representative: **Pfenning, Meinig & Partner mbB Patent- und Rechtsanwälte Joachimsthaler Straße 10-12 10719 Berlin (DE)**

(54) **POSITIONING DEVICE, POSITIONING METHOD, AND POSITIONING PROGRAM**

(57) A rigid transformation unit (13) performs selection of a plurality of feature point pairs $P_{a\text{-}b}$ from among all the feature point pairs $P_{a\text{-}b}$ searched by the pair searching unit (12), performs, from the plurality of feature points pairs $P_{a\text{-}b}$ being selected, calculation of a matrix G to be used in rigid transformation of three-dimensional point group data B, and performs rigid transformation of the three-dimensional point group data B using the matrix G. The rigid transformation unit (13) repeatedly performs the selection of the plurality of feature point pairs $P_{a\text{-}b}$, and repeatedly performs the calculation of the matrix G and the rigid transformation of the three-dimensional point group data B.

FIG. 1

**Description**

**TECHNICAL FIELD**

The present invention relates to a position matching device, a position matching method, and a position matching program for performing position matching between point group data indicating three-dimensional coordinate values of measurement points of a measurement target.

**BACKGROUND ART**

For example, by imaging an object being a measurement target from different viewpoints with a stereo camera or the like, plural sets of three-dimensional point group data are obtained. Three-dimensional point group data indicates three-dimensional coordinate values of measurement points of a measurement target.

At this stage, it is possible to obtain three-dimensional point group data of the entire measurement target by integrating the plural sets of three-dimensional point group data. However, if the three-dimensional coordinate values of the same measurement point deviate, the measurement target shape obtained from the integrated three-dimensional point group data becomes different from the shape of the actual measurement target.

For this reason, to integrate plural sets of three-dimensional point group data, it is necessary to perform position matching between the plural sets of three-dimensional point group data.

Patent Literature 1 listed later discloses a position matching device that performs position matching between two sets of three-dimensional point group data.

In the following, the position matching procedures carried out by this position matching device are briefly described.

Here, for ease of explanation, two sets of three-dimensional point group data are referred to as three-dimensional point group data A and three-dimensional point group data B, respectively

(1) Respective feature points a are extracted from the three-dimensional point group data A, and respective feature points b are extracted from the three-dimensional point group data B.

A feature point is a measurement point indicating a feature of the shape of the object being a measurement target, and may be a corner point of the object, a point belonging to a boundary of the object, or the like, for example.

(2) Three feature points a are freely extracted from the feature points a, and a triangle $\triangle_a$ having the three feature points a as its vertices is generated.

Likewise, three feature points b are freely extracted from the feature points b, and a triangle $\triangle_b$ having the three feature points b as its vertices is generated.

By changing the three feature points to be extracted, plural triangles $\triangle_a$ and plural triangles $\triangle_b$ are generated.

(3) A triangle among the plural triangles $\triangle_a$ and a triangle among the plural triangles $\triangle_b$ which are similar to each other are searched for.

(4) The respective vertices of a triangle $\triangle_a$ and a triangle $\triangle_b$ that are similar in shape are determined to have correspondence relationship with each other, and the feature point a and the feature point b being vertices having correspondence relationship with each other are defined as a feature point pair.

(5) The matrix to be used in rigid transformation of the three-dimensional point group data B is calculated from the feature point pair, and by applying rigid transformation to the three-dimensional point group data B using the matrix, position matching between the three-dimensional point group data A and the three-dimensional point group data B is performed.

The matrix used in the rigid transformation is formed by a matrix for rotating the three-dimensional point group data B and a vector for translating the three-dimensional point group data B.

**CITATION LIST**

**PATENT LITERATURE**

Patent Literature 1: JP 2012-14259 A

## SUMMARY OF INVENTION

### TECHNICAL PROBLEM

Since a conventional position matching device is configured as described above, there is a possibility that a triangle $\Delta_a$ and a triangle $\Delta_b$ that have no correspondence relationship are selected when there exist plural triangles $\Delta_b$ which are similar in shape to the triangle $\Delta_a$. In a case where a triangle $\Delta_a$ and a triangle $\Delta_b$ that have no correspondence relationship are selected, an error occurs in combination in a feature point pair. As a result, the accuracy of calculation of the matrix used for rigid transformation is deteriorated, so that the accuracy of position matching between plural sets of three-dimensional point group data is degraded in some cases.

The present invention has been made to solve the above problems, and an object of the present invention is to provide a position matching device, a position matching method, and a position matching program that are capable of increasing the accuracy of position matching between plural sets of three-dimensional point group data.

### SOLUTION TO PROBLEM

A position matching device according to this invention includes: a pair searching unit extracting a plurality of feature points from first point group data indicating three-dimensional coordinate values of a plurality of measurement points of a measurement target, extracting a plurality of feature points from second point group data indicating three-dimensional coordinate values of a plurality of measurement points of the measurement target, and searching for feature point pairs each of which indicates correspondence relationship between one of the plurality of feature points extracted from the first point group data and one of the plurality of feature points extracted from the second point group data; and a rigid transformation unit performing selection of a plurality of feature point pairs from among all the feature point pairs searched by the pair searching unit, performing, from the plurality of feature points pairs being selected, calculation of a matrix to be used in rigid transformation of the second point group data, and performing rigid transformation of the second point group data using the matrix. The rigid transformation unit repeatedly performs the selection of the plurality of feature point pairs, and repeatedly performs the calculation of the matrix and the rigid transformation of the second point group data.

### ADVANTAGEOUS EFFECTS OF INVENTION

According to this invention, the rigid transformation unit repeatedly performs the selection of the plurality of feature point pairs, and repeatedly performs the calculation of the matrix and the rigid transformation of the second point group data. Thus, it is possible to achieve an effect of enhancing the accuracy of position matching between plural sets of three-dimensional point group data.

### BRIEF DESCRIPTION OF DRAWINGS

FIG. 1 is a configuration diagram showing a position matching device according to a first embodiment of the present invention;

FIG. 2 is a hardware configuration diagram of the position matching device according to the first embodiment of the present invention;

FIG. 3 is a hardware configuration diagram of a computer in a case where the position matching device is formed with software, firmware, or the like;

FIG. 4 is a flowchart showing procedures of a pair searching process performed by a pair searching unit 12 in a case where the position matching device is realized by software, firmware, or the like;

FIG. 5 is a flowchart showing procedures of rigid transformation process performed by a rigid transformation unit 13 in a case where the position matching device is realized by software, firmware, or the like;

FIG. 6 is a configuration diagram showing a position matching device according to a second embodiment of the present invention;

FIG. 7 is a hardware configuration diagram of the position matching device according to the second embodiment of the present invention; and

FIG. 8 is a flowchart showing procedures of rigid transformation process performed by a rigid transformation unit 15 in a case where the position matching

device is realized by software, firmware, or the like.

## DESCRIPTION OF EMBODIMENTS

To explain the present invention in more detail, some embodiments for carrying out the present invention will be described below with reference to the accompanying drawings.

First Embodiment.

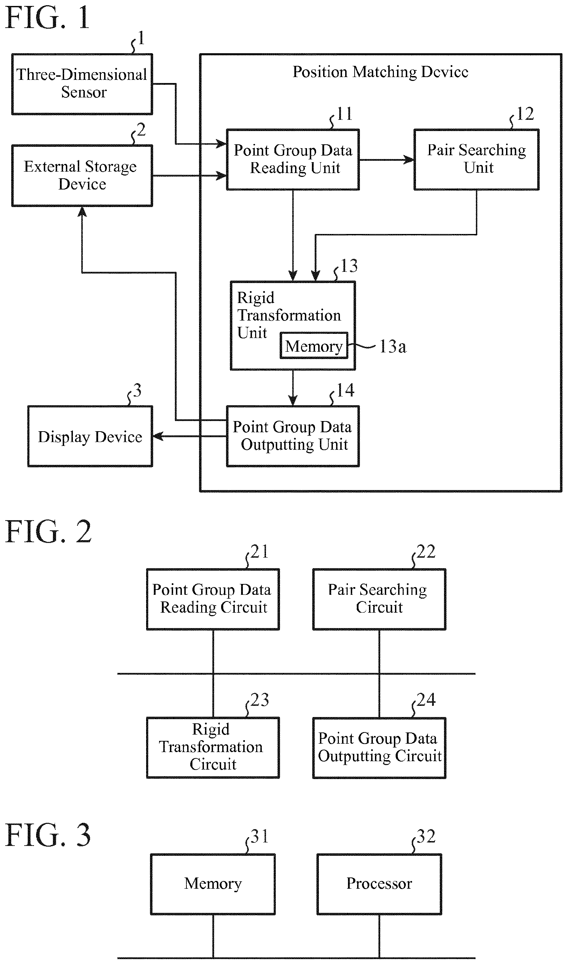

FIG. 1 is a configuration diagram showing a position matching device according to a first embodiment of the present invention. FIG. 2 is a hardware configuration diagram of the position matching device according to first embodiment of the present invention.

In FIGS. 1 and 2, a three-dimensional sensor 1 observes three-dimensional point group data A (first point group data) indicating the three-dimensional coordinate values of measurement points of a measurement target, and also observes three-dimensional point group data B (second point group data) indicating the three-dimensional coordinate values of measurement points of the measurement target.

For example, the three-dimensional point group data A and the three-dimensional point group data B are pieces of data observed from different viewpoints by the three-dimensional sensor 1. Alternatively, the three-dimensional point group data A and the three-dimensional point group data B are pieces of data observed at different times by the three-dimensional sensor 1.

In addition to the three-dimensional coordinate values (x, y, z) of measurement points, the three-dimensional point group data A and B may include color information or polygon information. The polygon information indicates the indices of three-dimensional points serving as the vertices of each polygon.

In the first embodiment, it is assumed that position matching between the three-dimensional point group data A and the three-dimensional point group data B is performed by applying rigid transformation to the three-dimensional point group data B. The three-dimensional point group data A may be referred to as target three-dimensional point group data, and the three-dimensional point group data B may be referred to as source three-dimensional point group data.

In the first embodiment, it is assumed that the position matching device acquires the three-dimensional point group data A and B observed by the three-dimensional sensor 1. Alternatively, the three-dimensional point group data A and B may be acquired from an external storage device 2.

The external storage device 2 is a storage device such as a hard disk that stores three-dimensional point group data A and B to which position matching is performed.

A point group data reading unit 11 is formed by a point group data reading circuit 21 shown in FIG. 2, for example, and performs a process of reading the three-dimensional point group data A and B observed by the three-dimensional sensor 1.

A pair searching unit 12 is formed by a pair searching circuit 22 shown in FIG. 2, for example. The pair searching unit 12 extracts feature points a from the three-dimensional point group data A read by the point group data reading unit 11, extracts feature points b from the three-dimensional point group data B read by the point group data reading unit 11, and performs a process of searching for feature point pairs each of which indicates correspondence relationship between a feature point a and a feature points b. Hereinafter, a pair of feature points will be expressed as a feature point pair $P_{a\text{-}b}$.

A rigid transformation unit 13 is formed by a rigid transformation circuit 23 shown in FIG. 2, for example, and includes a memory 13a inside.

The rigid transformation unit 13 performs a process of selecting three feature point pairs $P_{a\text{-}b}$, for example, as a plural feature point pairs $P_{a\text{-}b}$ from among all the feature point pairs $P_{a\text{-}b}$ searched by the pair searching unit 12.

The rigid transformation unit 13 calculates a matrix G to be used in rigid transformation of the three-dimensional point group data B on the basis of the selected three feature point pairs $P_{a\text{-}b}$, and performs a process of carrying out the rigid transformation of the three-dimensional point group data B using the matrix G.

The rigid transformation unit 13 repeats the selection process of selecting three feature point pairs $P_{a\text{-}b}$, and repeats the calculation process of calculating the matrix G and the rigid transformation process of carrying out the rigid transformation of the three-dimensional point group data B, until a final result of the rigid transformation of the three-dimensional point group data B is obtained.

A point group data outputting unit 14 is formed by a point group data outputting circuit 24 shown in FIG. 2, for example, and performs a process of storing the three-dimensional point group data B to which the rigid transformation is applied by the rigid transformation unit 13 in the external storage device 2. The point group data outputting unit 14 also performs a process of displaying the three-dimensional point group data B to which the rigid transformation is applied by the rigid transformation unit 13 on a display device 3.

The display device 3 is a display such as a liquid crystal display, for example, and displays the three-dimensional point group data B output from the point group data outputting unit 14.

In FIG. 1, it is assumed that the point group data reading unit 11, the pair searching unit 12, the rigid transformation unit 13, and the point group data outputting unit 14, which are components of the position matching device, are formed by dedicated hardware as shown in FIG. 2, namely, the point group data reading circuit 21, the pair searching circuit 22, the rigid transformation circuit 23, and the point group data outputting circuit 24, respectively.

Here, the point group data reading circuit 21, the pair searching circuit 22, the rigid transformation circuit 23, and the point group data outputting circuit 24 may be a single circuit, a composite circuit, a programmed processor, a parallel-programmed processor, an application specific integrated circuit (ASIC), a field-programmable gate array (FPGA), or a combination thereof.

However, the components of the position matching device are not necessarily formed by dedicated hardware, and the position matching device may be formed by software, firmware, or a combination of software and firmware.

Software and firmware are stored as programs in a memory of a computer. The computer means hardware that executes a program, and is a central processing unit (CPU), a central processor, a processing unit, an arithmetic unit, a microprocessor, a microcomputer, a processor, a digital signal processor (DSP), or the like, for example.

A memory of a computer may be a nonvolatile or volatile semiconductor memory such as a random access memory (RAM), a read only memory (ROM), a flash memory, an erasable programmable read only memory (EPROM), or an electrically erasable programmable read only memory (EEPROM), a magnetic disk, a flexible disk, an optical disk, a compact disk, a mini disk, a digital versatile disc (DVD), or the like, for example.

FIG. 3 is a hardware configuration diagram of a computer in a case where the position matching device is formed by software, firmware, or the like.

In a case where the position matching device is formed by software, firmware, or the like, a position matching program for causing a computer to carry out processing procedures of the point group data reading unit 11, the pair searching unit 12, the rigid transformation unit 13, and the point group data outputting unit 14 is stored in a memory 31, and a processor 32 of the computer executes the position matching program stored in the memory 31.

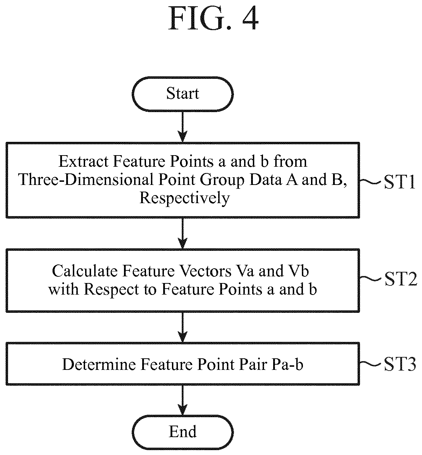

FIG. 4 is a flowchart showing the procedures of a pair searching process to be performed by the pair searching unit 12 in a case where the position matching device is formed by software, firmware, or the like.

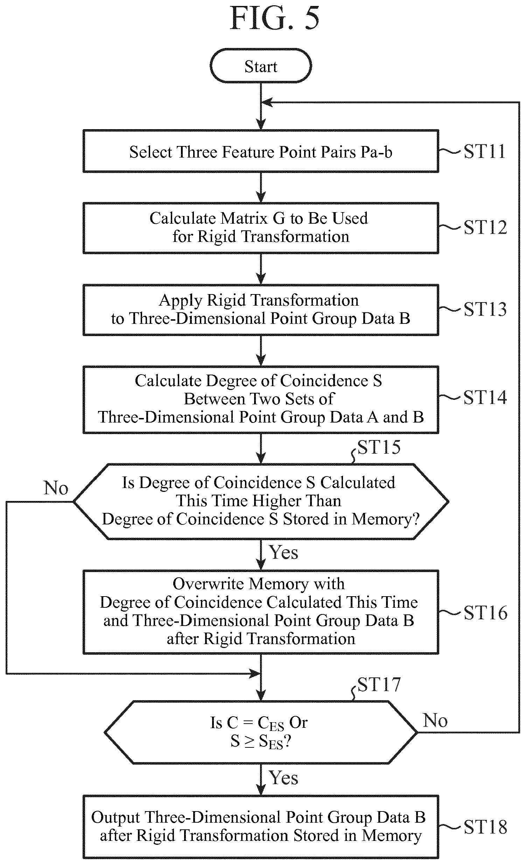

FIG. 5 is a flowchart showing the procedures of a rigid transformation process performed by the rigid transformation unit 13 in a case where the position matching device is formed by software, firmware, or the like.

Although FIG. 2 shows an example in which each of the components of the position matching device is formed by dedicated hardware, and FIG. 3 shows an example in which the position matching device is formed by software, firmware, or the like, some of the components of the position matching device may be formed by dedicated hardware, and the remaining components may be formed by software, firmware, or the like.

Next, the operation is described.

The point group data reading unit 11 reads out three-dimensional point group data A and B observed by the three-dimensional sensor 1, and outputs the three-dimensional point group data A and B to the pair searching unit 12.

Upon receiving the three-dimensional point group data A and B from the point group data reading unit 11, the pair searching unit 12 extracts plural feature points a from the three-dimensional point group data A, and extracts plural feature points b from the three-dimensional point group data B (step ST1 in FIG. 4).

A feature point is a measurement point indicating a feature of the shape of the target object to be measured, and may be a corner point of the object, a point belonging to a boundary of the object, or the like, for example.

Since the process of extracting the feature points a and b from the three-dimensional point group data A and B is a known technique, detailed explanation thereof is not made herein. For example, the feature points a and b are extracted from the three-dimensional point group data A and B by the feature point extracting method disclosed in the following Non-Patent Literature 1.

[Non-Patent Literature 1]

Yong Zhong, "Intrinsic shape signatures: A shape descriptor for 3D object recognition", IEEE, Proceedings of International Conference on Computer Vision Workshops, issued on September 27, 2009, pp. 689-696

After the feature points a and b are extracted from the three-dimensional point group data A and B by the pair searching unit 12, the pair searching unit 12 calculates feature vectors $V_a$ indicating the shape of the surrounding area for the respective feature points a (step ST2 in FIG. 4).

The pair searching unit 12 also calculates feature vectors $V_b$ indicating the shape of the surrounding area for the respective feature points b (step ST2 in FIG. 4).

In general, a feature vector is a multidimensional vector indicating the positional relationship of a feature point or the difference in the direction of the normal vector with respect to a measurement point existing in the surrounding area of the feature point.

Since the process of calculating the feature vectors $V_a$ and $V_b$ is a known technique, and the method of describing the feature vectors $V_a$ and $V_b$ is also a known technique, detailed explanation of them is not made herein. For example, in the first embodiment, the SHOT (Signatures of Histograms of OrienTations) feature amount disclosed in the following Non-Patent Literature 2 is used as the feature vector.

[Non-Patent Literature 2]

Federico Tombari et al., "Unique signatures of Histograms for local surface description", Springer, Proceedings of the 11th European Conference on Computer Vision, issued on September 5, 2010, pp. 356-369
After calculating the feature vectors $V_a$ of the feature points a and calculating the feature vectors $V_b$ of the feature points b, the pair searching unit 12 calculates a degree of similarity between a feature vector $V_a$ and a feature vector $V_b$ for each of the combinations of the feature vectors $V_a$ of the feature points a and the feature vectors $V_b$ of the feature points b. Since the process of calculating the degree of similarity between two feature vectors is a known technique, a detailed explanation thereof is not made herein.
Then, for each of the feature points a extracted from the three-dimensional point group data A, the pair searching unit 12 compares the degrees of similarity between the feature vector $V_a$ of the current feature point a and the respective feature vectors $V_b$ of plural feature points b, and identifies the feature point b corresponding to the feature vector $V_b$ having the highest degree of similarity among the feature vectors $V_b$ of the feature points b.
After identifying the feature point b corresponding to the feature vector $V_b$ having the highest degree of similarity, the pair searching unit 12 determines the current feature point a and the identified feature point b to be the feature point pair $P_{a-b}$ (step ST3 in FIG. 4).
Specifically, in a case where the number of the feature points a is N, and the number of the feature points b is M, for example, the feature point b corresponding to the feature vector $V_b$ having the highest degree of similarity to the current feature point a among the M feature points B is identified for each of the N feature points a, and the current feature point a and the identified feature point b are determined to be the feature point pair $P_{a-b}$.
In this case, N feature point pairs $P_{a-b}$ are determined. N is an integer being 3 or greater.
The rigid transformation unit 13 stores the N feature point pairs $P_{a-b}$ determined by the pair searching unit 12 in the internal memory 13a.
The rigid transformation unit 13 selects three feature point pairs $P_{a-b}$, for example, from the N feature point pairs $P_{a-b}$ stored in the memory 13a (step ST11 in FIG. 5).
The three feature point pairs $P_{a-b}$ are randomly selected from among the N feature point pairs $P_{a-b}$, but should be feature point pairs $P_{a-b}$ of combinations not selected before.
However, the three feature point pairs $P_{a-b}$ are not necessarily randomly selected from among the N feature point pairs $P_{a-b}$, but may be selected on the basis of a specific rule. For example, feature point pairs $P_{a-b}$ having higher degrees of similarity calculated by the pair searching unit 12 may be preferentially selected in some modes.
After selecting the three feature point pairs $P_{a-b}$, the rigid transformation unit 13 defines the three-dimensional coordinate values $p_{a, i}$ (i = 1, 2, 3) of the feature points a included in the three feature point pairs $P_{a-b}$, as shown below in the expression (1).

$$\boldsymbol{p}_{a,i} = \begin{bmatrix} x_{a,i} \\ y_{a,i} \\ z_{a,i} \end{bmatrix} (i = 1,2,3) \qquad (1)$$

The rigid transformation unit 13 also defines the three-dimensional coordinate values $p_{b, i}$ (i = 1, 2, 3) of the feature points b included in the three feature point pairs $P_{a-b}$, as shown below in the expression (2).

$$\boldsymbol{p}_{b,i} = \begin{bmatrix} x_{b,i} \\ y_{b,i} \\ z_{b,i} \end{bmatrix} (i = 1,2,3) \qquad (2)$$

After defining the three-dimensional coordinate values $p_{a, i}$ of the feature points a and the three-dimensional coordinate values $p_{b, i}$ of the feature points b included in the three feature point pairs $P_{a-b}$, the rigid transformation unit 13 calculates the matrix G to be used in the rigid transformation of the three-dimensional point group data B on the basis of the three-dimensional coordinate values $p_{a, i}$ of the feature points a and the three-dimensional coordinate values $p_{b, i}$ of the feature points b (step ST12 in FIG. 5).
The matrix G to be used in the rigid transformation is formed from a rotation matrix R that is a matrix for rotating the three-dimensional point group data B and a translation vector t that is a vector for translating the three-dimensional point group data B.

Therefore, the rigid transformation unit 13 calculates the rotation matrix R and the translation vector t as the matrix G to be used in the rigid transformation. In this calculation, to maximize the degrees of similarity between the feature points a and the feature points b by performing rigid transformation of the feature points b included in the three feature point pairs $P_{a-b}$, it is necessary to determine the rotation matrix R and the translation vector t that minimize the value expressed by the following expression (3).

$$\sum_{i=1}^{3}\left\|\boldsymbol{p}_{a,i}-\left(R\boldsymbol{p}_{b,i}+\boldsymbol{t}\right)\right\| \qquad (3)$$

In the expression (3), $\|k\|$ is the symbol representing the norm of the vector k.

There exist plural methods for calculating the rotation matrix R and the translation vector t that minimize the value expressed by the expression (3). In the example described in the first embodiment, the rotation matrix R and the translation vector t are calculated by the method disclosed in the following Non-Patent Literature 3.

[Non-Patent Literature 3]

"Computer Vision and Image Media 3", edited by Yasushi Yagi et al., Advanced Communication Media Co., Ltd., published on December 8, 2010, pp. 36-37

The rigid transformation unit 13 calculates a covariance matrix $\Sigma$ for the three feature point pairs $P_{a-b}$, as shown in the expression (4) below.

$$\Sigma=\frac{1}{3}\sum_{i=1}^{3}\left\{\left(\boldsymbol{p}_{a,i}-\boldsymbol{\mu}_{a}\right)\left(\boldsymbol{p}_{b,i}-\boldsymbol{\mu}_{b}\right)^{t}\right\} \qquad (4)$$

In the expression (4), $k^{t}$ represents the transpose of the vector k.

$\mu_{a}$ represents the barycentric coordinate values of the three-dimensional coordinate values $p_{a,i}$ of the three feature points a, and $\mu_{b}$ represents the barycentric coordinate values of the three-dimensional coordinate values $p_{b,i}$ of the three feature points b.

$$\boldsymbol{\mu}_{a}=\frac{1}{3}\sum_{i=1}^{3}\boldsymbol{p}_{a,i} \qquad (5)$$

$$\boldsymbol{\mu}_{b}=\frac{1}{3}\sum_{i=1}^{3}\boldsymbol{p}_{b,i} \qquad (6)$$

After calculating the covariance matrix $\Sigma$, the rigid transformation unit 13 calculates the rotation matrix R by performing singular value decomposition of the covariance matrix $\Sigma$ as shown in the expression (8) below, and calculates the translation vector t as shown in the expression (9) below.

That is, since the matrices U and $V^{t}$ in the expression (7) below are determined by performing singular value decomposition of the covariance matrix $\Sigma$, the rigid transformation unit 13 calculates the rotation matrix R by substituting the matrices U and $V^{t}$ into the expression (8) shown below. Further, the translation vector t is calculated by substituting the calculated rotation matrix R into the expression (9) shown below.

$$\Sigma = USV^t \qquad\qquad (7)$$

$$R = U \begin{bmatrix} 1 & 0 & 0 \\ 0 & 1 & 0 \\ 0 & 0 & \det(UV^t) \end{bmatrix} V^t \qquad\qquad (8)$$

$$t = \mu_b - R\mu_a \qquad\qquad (9)$$

In the expression (8), det () is the symbol representing the determinant.

After calculating the rotation matrix R and the translation vector t for the matrix G to be used in the rigid transformation, the rigid transformation unit 13 performs the rigid transformation of the source three-dimensional point group data B by rotating the source three-dimensional point group data B using the rotation matrix R and translating the source three-dimensional point group data B using the translation vector t (step ST13 in FIG. 5).

After the rigid transformation of the source three-dimensional point group data B, the rigid transformation unit 13 calculates the degree of coincidence S between the three-dimensional point group data B after the rigid transformation and the target three-dimensional point group data A (step ST14 in FIG. 5).

That is, the rigid transformation unit 13 determines the distances from the respective feature points b included in the three-dimensional point group data B after the rigid transformation to the nearest neighbor feature point a included in the target three-dimensional point group data A, and calculates the reciprocal of the average value of these distances as the degree of coincidence S.

$$S = \frac{\sum_{p_{b,i} \in B} d(p_{b,i}, A)}{H} \qquad\qquad (10)$$

In the expression (10), H represents the number of the feature points b included in the three-dimensional point group data B after the rigid transformation.

$d(p_{b,i}, A)$ represents the distance from each of the feature points b included in the three-dimensional point group data B after the rigid transformation to the nearest feature point a included in the target three-dimensional point group data A, and is expressed as in the expression (11) shown below.

$$d(p_{b,i}, A) = \min_{p_{a,j} \in A} \| p_{a,j} - p_{b,i} \| \qquad\qquad (11)$$

In the expression (11), $p_{a,j}$ represents the three-dimensional coordinate values of the plural feature points a included in the three-dimensional point group data A.

After calculating the degree of coincidence S between the three-dimensional point group data B after the rigid transformation and the target three-dimensional point group data A, the rigid transformation unit 13 stores the degree of coincidence S in the memory 13a, and also stores the three-dimensional point group data B after the rigid transformation in the memory 13a if the process of calculating the degree of coincidence S is performed for the first-time.

If the process of calculating the degree of coincidence S is performed for the second time or later, the rigid transformation unit 13 compares the degree of coincidence S calculated this time with the degree of coincidence S stored in the memory 13a. If the degree of coincidence S calculated this time is higher than the degree of coincidence S stored in the memory 13a (Yes in step ST15 in FIG. 5), the rigid transformation unit 13 overwrites the memory 13a with the coincidence degree S calculated this time and also overwrites the memory 13a with the three-dimensional point group data B after the rigid transformation performed at this time (step ST16 in FIG. 5). In a case where the degree of coincidence S calculated this time is equal to or lower than the degree of coincidence S stored in the memory 13a, the three-dimensional point group data B after the rigid transformation performed this time is discarded.

As a result, the degree of coincidence S stored in the memory 13a is updated to the highest degree of coincidence S among the degrees of coincidence S calculated in the calculation processes so far, and the three-dimensional point group data B after the rigid transformation stored in the memory 13a is updated to the three-dimensional point group data B corresponding to the highest degree of coincidence S.

The rigid transformation unit 13 compares the number of times C the rigid transformation process has been performed so far with the set number of trial times $C_{ES}$ (a first threshold value) that is the preset number of times, and further compares the degree of coincidence S stored in the memory 13a with a set degree of coincidence $S_{ES}$ (a second threshold value) that is a preset degree of coincidence. The set number of trial times $C_{ES}$ and the set degree of coincidence $S_{ES}$ vary depending on the number of pieces of data included in the three-dimensional point group data or the like. For example, the set number of trial times $C_{ES}$ is ten, and the set degree of coincidence $S_{ES}$ is 1/10 cm.

In a case where $C < C_{ES}$ and $S < S_{ES}$, that is, where the number of times C has not reached the set number of trial times $C_{ES}$, and the degree of coincidence S stored in the memory 13a is lower than the set degree of coincidence $S_{ES}$ (No in step ST17 in FIG. 5), the process returns to step ST11, and the rigid transformation unit 13 repeatedly performs the process of selecting a feature point pair $P_{a-b}$, the process of calculating the matrix G to be used in rigid transformation, and the rigid transformation process (steps ST11 through ST16 in FIG. 5).

In a case where $C = C_{ES}$ or $S \geq S_{ES}$, that is, where the number of times C reaches the set number of trial times $C_{ES}$, or in a case where the degree of coincidence S stored in the memory 13a is equal to or higher than the set degree of coincidence $S_{ES}$ (Yes in step ST17 in FIG. 5), the rigid transformation unit 13 outputs the three-dimensional point group data B after the rigid transformation stored in the memory 13a to the point group data outputting unit 14 (step ST18 in FIG. 5).

Upon receiving the three-dimensional point group data B after the rigid transformation from the rigid transformation unit 13, the point group data outputting unit 14 stores the three-dimensional point group data B after the rigid transformation in the external storage device 2 as the three-dimensional point group data B after position matching, or displays the three-dimensional point group data B after the rigid transformation by the display device 3.

As is apparent from the above description, according to the first embodiment, the rigid transformation unit 13 repeatedly performs the selection process of selecting plural feature point pairs and repeatedly performs the calculation process of calculating the matrix G to be used in the rigid transformation and the rigid transformation process of performing the rigid transformation of the three-dimensional point group data B. Thus, it is possible to achieve an effect of increasing the accuracy of position matching between the three-dimensional point group data A and the three-dimensional point group data B.

That is, in the first embodiment, even in a case where the feature point pairs $P_{a-b}$ determined by the pair searching unit 12 include a feature point pair $P_{a-b}$ being a wrong combination, it is possible to lower the possibility that the rigid transformation unit 13 outputs the three-dimensional point group data B after the rigid transformation using the matrix G calculated using the wrong feature point pair $P_{a-b}$. Thus, the accuracy of position matching between the three-dimensional point group data A and the three-dimensional point group data B can be increased.

In the example described in the first embodiment, the rigid transformation unit 13 selects three feature point pairs $P_{a-b}$ from the N feature point pairs $P_{a-b}$ searched by the pair searching unit 12. However, the present invention is not limited to such an example, and four or more feature point pairs $P_{a-b}$ may be selected from among the N feature point pairs $P_{a-b}$.

Second Embodiment

In the first embodiment described above, after three feature point pairs $P_{a-b}$ are selected from among the N feature point pairs $P_{a-b}$ searched by the pair searching unit 12, the rigid transformation unit 13 calculates the matrix G to be used in the rigid transformation from the three feature point pairs $P_{a-b}$, without determining whether the three feature point pairs $P_{a-b}$ are good or bad. In a second embodiment described below, on the other hand, a rigid transformation unit 15 determines whether the three feature point pairs $P_{a-b}$ are good or bad, and, if the result of the determination is bad, reselects three feature point pairs $P_{a-b}$ from among the N feature point pairs $P_{a-b}$ searched by the pair searching unit 12.

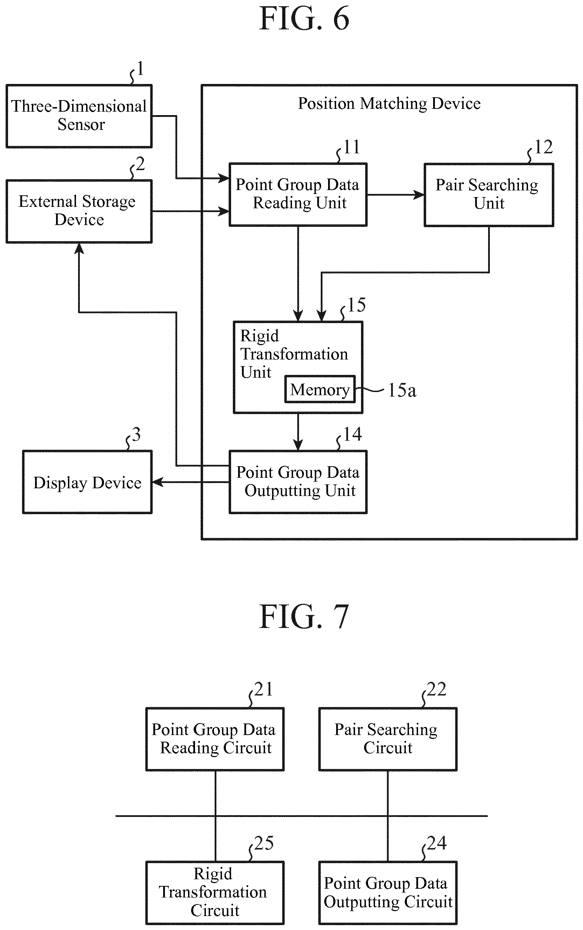

FIG. 6 is a configuration diagram showing a position matching device according to the second embodiment of the present invention. FIG. 7 is a hardware configuration diagram of the position matching device according to the second embodiment of the present invention.

In FIGS. 6 and 7, the same reference numerals as those in FIGS. 1 and 2 denote the same or corresponding components, and therefore, explanation of them is not made herein.

The rigid transformation unit 15 is formed by a rigid transformation circuit 25 shown in FIG. 7, for example, and includes a memory 15a inside.

Like the rigid transformation unit 13 shown in FIG. 1, the rigid transformation unit 15 performs a process of selecting three feature point pairs $P_{a-b}$ as the feature point pairs $P_{a-b}$ from among all the feature point pairs $P_{a-b}$ searched by the pair searching unit 12, for example.

Like the rigid transformation unit 13 shown in FIG. 1, the rigid transformation unit 15 calculates a matrix G to be used in the rigid transformation of the three-dimensional point group data B using the selected three feature point pairs $P_{a-b}$, and performs a process of applying the rigid transformation to the three-dimensional point group data B using the matrix G.

Like the rigid transformation unit 13 shown in FIG. 1, the rigid transformation unit 15 repeats the selection process to select three feature point pairs $P_{a-b}$, and repeats the calculation process of a matrix and the rigid transformation process of the three-dimensional point group data B, until the final result of the rigid transformation of the three-dimensional point group data B is obtained.

Unlike the rigid transformation unit 13 shown in FIG. 1, the rigid transformation unit 15 determines whether the selected three feature point pairs $P_{a-b}$ are good or bad. If the result of the determination is bad, the rigid transformation unit 15 performs a process of reselecting three feature point pairs $P_{a-b}$ from among the N feature point pairs $P_{a-b}$ searched by the pair searching unit 12.

In FIG. 6, it is assumed that the point group data reading unit 11, the pair searching unit 12, the rigid transformation unit 15, and the point group data outputting unit 14, which are components of the position matching device, are formed by dedicated hardware as shown in FIG. 7, that is, the point group data reading circuit 21, the pair searching circuit 22, the rigid transformation circuit 25, and the point group data outputting circuit 24, respectively.

Here, the point group data reading circuit 21, the pair searching circuit 22, the rigid transformation circuit 25, and the point group data outputting circuit 24 may be realized by a single circuit, a composite circuit, a programmed processor, a parallel-programmed processor, ASIC, FPGA, or a combination thereof.

However, the components of the position matching device are not necessarily formed by dedicated hardware, and the position matching device may be formed by software, firmware, or a combination of software and firmware.

In a case where the position matching device is formed by software, firmware, or the like, a position matching program for causing a computer to carry out processing procedures of the point group data reading unit 11, the pair searching unit 12, the rigid transformation unit 15, and the point group data outputting unit 14 is stored in the memory 31 shown in FIG. 3, and the processor 32 of the computer executes the position matching program stored in the memory 31.

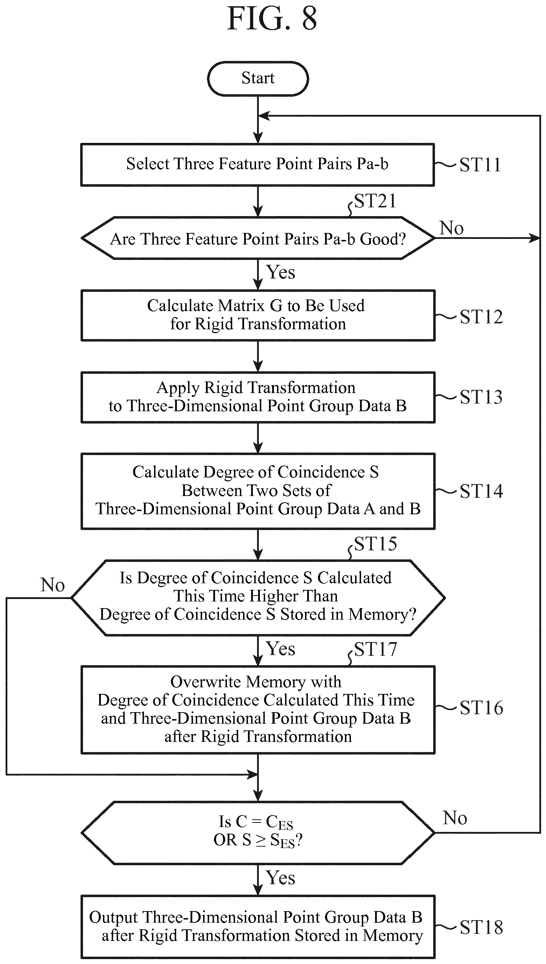

FIG. 8 is a flowchart showing the procedures in a rigid transformation process to be performed by the rigid transformation unit 15 in a case where the position matching device is formed by software, firmware, or the like. In FIG. 8, the same reference numerals as those in FIG. 5 indicate the same or corresponding parts.

Next, the operation is described.

In this description, since the components other than the rigid transformation unit 15 are the same as those of the first embodiment, only the procedures carried out by the rigid transformation unit 15 are described.

Like the rigid transformation unit 13 shown in FIG. 1, the rigid transformation unit 15 stores the N feature point pairs $P_{a-b}$ searched by the pair searching unit 12 in the internal memory 15a.

The rigid transformation unit 15 selects three feature point pairs $P_{a-b}$, for example, from the N feature point pairs $P_{a-b}$ stored in the memory 15a (step ST11 in FIG. 8).

After selecting the three feature point pairs $P_{a-b}$, the rigid transformation unit 15 determines whether the three feature point pairs $P_{a-b}$ are good or bad.

The determination as to whether the three feature point pairs $P_{a-b}$ are good or bad is made by determining whether the positional relationship in the three feature point pairs $P_{a-b}$ is such that the matrix G to be used in the rigid transformation can be calculated with high accuracy.

For example, the rigid transformation unit 15 determines whether the three feature point pairs $P_{a-b}$ are good or bad in the manner specifically described below.

The rigid transformation unit 15 determines whether the triangle that is the polygon having the three feature points a included in the three feature point pairs $P_{a-b}$ as its vertices is similar to the triangle that is the polygon having the three feature points b included in the three feature point pairs $P_{a-b}$ as its vertices.

If the two triangles are determined to be similar, the rigid transformation unit 15 determines that the three feature point pairs $P_{a-b}$ are good. If the two triangles are determined not to be similar, the rigid transformation unit 15 determines that the three feature point pairs $P_{a-b}$ are bad.

In the description below, a method implemented by the rigid transformation unit 15 for determining the similarity between two triangles is specifically explained.

First, the rigid transformation unit 15 calculates the difference in the length of the corresponding sides of the triangle having the three feature points a as the vertices and the triangle having the three feature points b as the vertices for every side.

The rigid transformation unit 15 then determines whether the ratio of the difference in the length to the length of the longer one in the corresponding sides is within 10%.

If the ratios of the differences for all three pairs of corresponding sides are within 10%, the rigid transformation unit 15 determines that the two triangles are similar. If there is even one side among the corresponding three sides in which the ratio of the difference is higher than 10%, the rigid transformation unit 15 determines that the two triangles are not similar.

If the three feature point pairs $P_{a-b}$ are determined to be bad by the rigid transformation unit 15 (No in step ST21 in FIG. 8), the process returns to step ST11, and the rigid transformation unit 15 reselects three feature point pairs $P_{a-b}$ from among the N feature point pairs $P_{a-b}$ stored in the memory 15a (step ST11 in FIG. 8).

At this stage, the reselected combination of the three feature point pairs $P_{a-b}$ is a combination that is not selected before.

If the three feature point pairs $P_{a-b}$ are determined to be good by the rigid transformation unit 15 (Yes in step ST21 in FIG. 8), the process moves to step ST12. The procedures to be carried out thereafter are the same as those to be carried out by the rigid transformation unit 13 in FIG. 1 in the first embodiment, and therefore, explanation thereof is not made herein.

As is apparent from the above description, according to the second embodiment, the rigid transformation unit 15 determines whether the three feature point pairs $P_{a-b}$ are good or bad. If the result of the determination is bad, three feature point pairs $P_{a-b}$ are reselected from among the N feature point pairs $P_{a-b}$ searched by the pair searching unit 12. Accordingly, the accuracy of calculation of the matrix G to be used in the rigid transformation becomes higher than that in the first embodiment described above, and the accuracy of the position matching between the three-dimensional point group data A and the three-dimensional point group data B can be enhanced.

Furthermore, it is possible to omit rigid transformation processes and coincidence calculation processes that do not need to be performed. Accordingly, it is possible to reduce the calculation amount and shorten the processing time as compared with the first embodiment.

In the second embodiment, the rigid transformation unit 15 determines whether the three feature point pairs $P_{a-b}$ are good or bad, and if the result of the determination is bad, reselects three feature point pairs $P_{a-b}$ from among the N feature point pairs $P_{a-b}$ searched by the pair searching unit 12. Alternatively, the rigid transformation unit 15 may determine whether the matrix G to be used in the rigid transformation of the three-dimensional point group data B is good or bad, and if the result of the determination is bad, reselect three feature point pairs $P_{a-b}$ from among the N feature point pairs $P_{a-b}$ searched by the pair searching unit 12. Also in this case, the accuracy of the position matching between the three-dimensional point group data A and the three-dimensional point group data B can be increased.

The goodness/badness of the matrix G to be used in the rigid transformation of the three-dimensional point group data B is determined as described below, for example.

Like the rigid transformation unit 13 in FIG. 1, the rigid transformation unit 15 performs rigid transformation of the source three-dimensional point group data B, and, as in the expression (12) shown below, the rigid transformation unit 15 calculates the distances D between the three feature points a included in the three feature point pairs $P_{a-b}$ and the three feature points b included in the three feature point pairs $P_{a-b}$ after the rigid transformation.

$$D = \sum_{i=1}^{3} \left\| \boldsymbol{p}_{a,i} - (R\boldsymbol{p}_{b,i} + \boldsymbol{t}) \right\| \qquad (1\,2)$$

If the calculated distance D is shorter than a preset distance threshold value, the rigid transformation unit 15 determines that the matrix G to be used in the rigid transformation of the three-dimensional point group data B is good. If the calculated distances D are equal to or larger than the distance threshold value, the rigid transformation unit 15 determines that the matrix G to be used in the rigid transformation of the three-dimensional point group data B is bad. The distance threshold value is 10 cm, for example.

If the rigid transformation unit 15 determines that the matrix G to be used in the rigid transformation of the three-dimensional point group data B is good, the procedures to be carried out thereafter are the same as those to be carried out by the rigid transformation unit 13 in the first embodiment.

If the rigid transformation unit 15 determines that the matrix G to be used in the rigid transformation of the three-dimensional point group data B is bad, the process performed by the rigid transformation unit 15 returns to the process in step ST11, and the rigid transformation unit 15 reselects three feature point pairs $P_{a-b}$ from among the N feature point pairs $P_{a-b}$ stored in the memory 15a.

The goodness/badness of the matrix G to be used in the rigid transformation of the three-dimensional point group data B may be determined in the manner described below.

Like the rigid transformation unit 13 in FIG. 1, the rigid transformation unit 15 performs the rigid transformation of the source three-dimensional point group data B. However, in a case where the area of the triangle having the three feature points a as its vertices is different from the area of the triangle having the three feature points b as its vertices, the rigid transformation of the three-dimensional point group data B is not sufficient for the position matching between the three-dimensional point group data A and the three-dimensional point group data B. Therefore, the three-dimensional point group data B after the rigid transformation is enlarged or reduced in some cases.

In such a case, the rigid transformation unit 15 calculates the ratio between the size of the triangle having the three feature points a included in the three feature point pairs $P_{a-b}$ as its vertexes and the size of the triangle having the three feature points b included in the three feature point pairs $P_{a-b}$ after the rigid transformation as its vertices, that is, the scaling factor r of the three-dimensional point group data B.

The scaling factor r of the three-dimensional point group data B can be calculated by a method disclosed in Non-Patent Literature 4 mentioned below, for example.

$$ r = \frac{\sum_{i=1}^{3}\left(p_{a,i}-\mu_a\right)^t\left(p_{b,i}-\mu_b\right)}{\sum_{i=1}^{3}\left(p_{b,i}-\mu_b\right)^t\left(p_{b,i}-\mu_b\right)} \qquad (13) $$

[Non-Patent Literature 4]

Timo Zinßer et al., "Point Set Registration with Integrated Scale Estimation", Proceedings of the Eighth International Conference on Pattern Recognition and Image Processing, published on May 18, 2005, pp. 116-119

If the calculated scaling factor r is close to 1, that is, if the calculated scaling factor r is within a preset threshold range, the rigid transformation unit 15 determines that the matrix G to be used in the rigid transformation of the three-dimensional point group data B is good. This threshold value may be 0.9 to 1.1, for example.

If the calculated scaling factor r is significantly different from 1, that is, if the calculated scaling factor r is outside the preset threshold range, the rigid transformation unit 15 determines that the matrix G to be used in the rigid transformation of the three-dimensional point group data B is bad.

If the rigid transformation unit 15 determines that the matrix G to be used in the rigid transformation of the three-dimensional point group data B is good, the procedures to be carried out thereafter are the same as those to be carried out by the rigid transformation unit 13 in the first embodiment.

If the rigid transformation unit 15 determines that the matrix G to be used in the rigid transformation of the three-dimensional point group data B is bad, the process performed by the rigid transformation unit 15 returns to the process in step ST11, and the rigid transformation unit 15 reselects three feature point pairs $P_{a-b}$ from among the N feature point pairs $P_{a-b}$ stored in the memory 15a.

Note that, within the scope of the present invention, the embodiments can be freely combined, modifications may be made to any component of any embodiment, or any component may be omitted from any embodiment.

**INDUSTRIAL APPLICABILITY**

The present invention is suitable for a position matching device, a position matching method, and a position matching program for performing position matching between sets of point group data each indicating the three-dimensional coordinate values of measurement points of a measurement target.

**REFERENCE SIGNS LIST**

1: Three-dimensional sensor, 2: External storage device, 3: Display device, 11: Point group data reading unit, 12: Pair searching unit, 13: Rigid transformation unit, 13a: Memory, 14: Point group data outputting unit, 15: Rigid transformation unit, 15a: Memory, 21: Point group data reading circuit, 22: Pair searching circuit, 23: Rigid transformation circuit, 24: Point group data outputting circuit, 25: Rigid transformation circuit, 31: Memory, 32: Processor

**Claims**

**1.** A position matching device comprising:

a pair searching unit extracting a plurality of feature points from first point group data indicating three-dimensional coordinate values of a plurality of measurement points of a measurement target, extracting a plurality of feature points from second point group data indicating three-dimensional coordinate values of a plurality of measurement points of the measurement target, and searching for feature point pairs each of which indicates correspondence relationship between one of the plurality of feature points extracted from the first point group data and one of the plurality of feature points extracted from the second point group data; and
a rigid transformation unit performing selection of a plurality of feature point pairs from among all the feature point pairs searched by the pair searching unit, performing, from the plurality of feature points pairs being selected, calculation of a matrix to be used in rigid transformation of the second point group data, and performing rigid transformation of the second point group data using the matrix,

wherein the rigid transformation unit repeatedly performs the selection of the plurality of feature point pairs, and repeatedly performs the calculation of the matrix and the rigid transformation of the second point group data.

**2.** The position matching device according to claim 1, wherein,
every time performing the rigid transformation of the second point group data, the rigid transformation unit calculates a degree of coincidence between the first point group data and the second point group data after the rigid transformation, and,
when the degree of coincidence calculated at a current time is higher than all the degrees of coincidence calculated before, the second point group data after the rigid transformation being currently performed is stored to overwrite the second point group data being currently stored as the second point group data after position matching.

**3.** The position matching device according to claim 2, wherein the rigid transformation unit repeatedly performs the selection of the plurality of feature point pairs, the calculation of the matrix, and the rigid transformation, until the number of times the rigid transformation has been performed reaches a first threshold value.

**4.** The position matching device according to claim 2, wherein the rigid transformation unit repeatedly performs the selection of the plurality of feature point pairs, the calculation of the matrix calculation process, and the rigid transformation, until the degree of coincidence between the first point group data and the second point group data after the rigid transformation becomes higher than a second threshold value.

**5.** The position matching device according to claim 2, wherein, when repeatedly performing the selection of the plurality of feature point pairs from among all the feature point pairs searched by the pair searching unit, the rigid transformation unit selects the plurality of feature point pairs to be a different combination of feature points every time.

**6.** The position matching device according to claim 5, wherein, after performing the selection of the plurality of feature point pairs from among all the feature point pairs searched by the pair searching unit, the rigid transformation unit performs determination of whether the plurality of feature point pairs being selected are good or bad, and, when a result of the determination is bad, reselects a plurality of feature point pairs from among all the feature point pairs searched by the pair searching unit.

**7.** The position matching device according to claim 6, wherein the rigid transformation unit performs similarity determination by determining whether a polygon having, as vertices, a plurality of feature points extracted from the first point group data included in the plurality of feature point pairs being selected by the selection is similar to a polygon having, as vertices, a plurality of feature points extracted from the second point group data included in the plurality of feature point pairs being selected by the selection, and determines whether the plurality of feature point pairs being selected are good or bad in accordance with a result of the similarity determination.

**8.** The position matching device according to claim 5, wherein the rigid transformation unit performs determination of whether the matrix to be used in the rigid transformation of the second point group data is good, and, when a result of the determination is bad, reselects a plurality of feature point pairs from among all the feature point pairs searched by the pair searching unit.

**9.** The position matching device according to claim 8, wherein the rigid transformation unit performs rigid transformation of a plurality of feature points extracted from the second point group data included in the plurality of feature point pairs being selected by the selection, using the matrix to be used in the rigid transformation of the second point group data, and determines whether the matrix is good or bad in accordance with a distance between the plurality of feature points extracted from the first point group data included in the plurality of feature point pairs being selected by the selection and the plurality of feature points extracted from the second point group data after the rigid transformation.

**10.** The position matching device according to claim 8, wherein the rigid transformation unit performs rigid transformation of a plurality of feature points extracted from the second point group data included in the plurality of feature point pairs being selected by the selection, using the matrix to be used in the rigid transformation of the second point group data, and determines whether the matrix is good or bad in accordance with a ratio in size between a polygon having, as its vertices, the plurality of feature points extracted from the first point group data included in the plurality of feature point pairs being selected by the selection and a polygon having, as its vertices, the plurality of feature points extracted from the second point group data after the rigid transformation.

11. The position matching device according to claim 1, wherein, for each feature point extracted from the first and second point group data, the pair searching unit determines a feature vector indicating a shape of a surrounding area of the feature point, and searches for a plurality of feature point pairs having correspondence relationship with each other by comparing feature vectors respectively corresponding to a plurality of feature points extracted from the first point group data with a feature vector respectively corresponding to a plurality of feature points extracted from the second point group data.

12. A position matching method comprising:

by a pair searching unit, extracting a plurality of feature points from first point group data indicating three-dimensional coordinate values of a plurality of measurement points of a measurement target, extracting a plurality of feature points from second point group data indicating three-dimensional coordinate values of a plurality of measurement points of the measurement target, and searching for feature point pairs each of which indicates correspondence relationship between one of the plurality of feature points extracted from the first point group data and one of the plurality of feature points extracted from the second point group data; and
by a rigid transformation unit, performing selection of a plurality of feature point pairs from among all the feature point pairs searched by the pair searching unit, performing, from the plurality of feature points pairs being selected, calculation of a matrix to be used in rigid transformation of the second point group data, and performing rigid transformation of the second point group data using the matrix,

wherein the rigid transformation unit repeatedly performs the selection of the plurality of feature point pairs, and repeatedly performs the calculation of the matrix and the rigid transformation of the second point group data.

13. A position matching program for causing a computer to carry out a method comprising:

a pair searching process including: extracting a plurality of feature points from first point group data indicating three-dimensional coordinate values of a plurality of measurement points of a measurement target; extracting a plurality of feature points from second point group data indicating three-dimensional coordinate values of a plurality of measurement points of the measurement target; and searching for feature point pairs each of which indicates correspondence relationship between one of the plurality of feature points extracted from the first point group data and one of the plurality of feature points extracted from the second point group data; and
a rigid transformation process including: performing selection of a plurality of feature point pairs from among all the feature point pairs searched by the pair searching process, performing, from the plurality of feature points pairs being selected, calculation of a matrix to be used in rigid transformation of the second point group data, and performing rigid transformation of the second point group data using the matrix,

wherein in the rigid transformation process, the selection of the plurality of feature point pairs is repeatedly performed, and the calculation of the matrix and the rigid transformation of the second point group data are repeatedly performed.

FIG. 1

Three-Dimensional
Sensor — 1

External Storage
Device — 2

Position Matching Device

Point Group Data
Reading Unit — 11

Pair Searching
Unit — 12

Rigid
Transformation
Unit — 13

Memory — 13a

Display Device — 3

Point Group Data
Outputting Unit — 14

FIG. 2

Point Group Data
Reading Circuit — 21

Pair Searching
Circuit — 22

Rigid
Transformation
Circuit — 23

Point Group Data
Outputting Circuit — 24

FIG. 3

Memory — 31

Processor — 32

# FIG. 4

```
                    ┌─────────┐
                    │  Start  │
                    └─────────┘
                         │
                         ▼
   ┌──────────────────────────────────────────┐
   │        Extract Feature Points a and b from│
   │  Three-Dimensional Point Group Data A and B,│──ST1
   │                 Respectively               │
   └──────────────────────────────────────────┘
                         │
                         ▼
   ┌──────────────────────────────────────────┐
   │        Calculate Feature Vectors Va and Vb │
   │     with Respect to Feature Points a and b │──ST2
   └──────────────────────────────────────────┘
                         │
                         ▼
   ┌──────────────────────────────────────────┐
   │        Determine Feature Point Pair Pa-b   │──ST3
   └──────────────────────────────────────────┘
                         │
                         ▼
                    ┌─────────┐
                    │   End   │
                    └─────────┘
```

# FIG. 5

```
                    ( Start )
                        │
                        ▼
┌─────────────────────────────────────────┐
│   Select Three Feature Point Pairs Pa-b  │ ～ST11
└─────────────────────────────────────────┘
                        │
                        ▼
┌─────────────────────────────────────────┐
│     Calculate Matrix G to Be Used        │ ～ST12
│       for Rigid Transformation           │
└─────────────────────────────────────────┘
                        │
                        ▼
┌─────────────────────────────────────────┐
│        Apply Rigid Transformation        │ ～ST13
│  to Three-Dimensional Point Group Data B │
└─────────────────────────────────────────┘
                        │
                        ▼
┌─────────────────────────────────────────┐
│      Calculate Degree of Coincidence S   │ ～ST14
│            Between Two Sets of           │
│  Three-Dimensional Point Group Data A and B │
└─────────────────────────────────────────┘
                        │          ST15
                        ▼
         ╱────────────────────────────────╲
        ╱   Is Degree of Coincidence S Calculated ╲
   No  ⟨      This Time Higher Than              ⟩
        ╲  Degree of Coincidence S Stored in Memory? ╱
         ╲────────────────────────────────╱
                        │ Yes
                        ▼
┌─────────────────────────────────────────┐
│         Overwrite Memory with            │
│  Degree of Coincidence Calculated This Time │ ～ST16
│  and Three-Dimensional Point Group Data B │
│          after Rigid Transformation      │
└─────────────────────────────────────────┘
                        │          ST17
                        ▼
         ╱────────────────────────────────╲
        ╱          Is C = C_ES Or           ╲   No
       ⟨             S ≥ S_ES?               ⟩
        ╲                                    ╱
         ╲────────────────────────────────╱
                        │ Yes
                        ▼
┌─────────────────────────────────────────┐
│ Output Three-Dimensional Point Group Data B │ ～ST18
│ after Rigid Transformation Stored in Memory │
└─────────────────────────────────────────┘
```

Is $C = C_{ES}$ Or $S \geq S_{ES}$?

# FIG. 6

# FIG. 7

# FIG. 8

Start

Select Three Feature Point Pairs Pa-b —ST11

ST21

Are Three Feature Point Pairs Pa-b Good? — No

Yes

Calculate Matrix G to Be Used
for Rigid Transformation —ST12

Apply Rigid Transformation
to Three-Dimensional Point Group Data B —ST13

Calculate Degree of Coincidence S
Between Two Sets of
Three-Dimensional Point Group Data A and B —ST14

ST15

No — Is Degree of Coincidence S Calculated
This Time Higher Than
Degree of Coincidence S Stored in Memory?

Yes    ST17

Overwrite Memory with
Degree of Coincidence Calculated This Time
and Three-Dimensional Point Group Data B
after Rigid Transformation —ST16

Is $C = C_{ES}$
OR $S \geq S_{ES}$? — No

Yes

Output Three-Dimensional Point Group Data B
after Rigid Transformation Stored in Memory —ST18

## INTERNATIONAL SEARCH REPORT

| | International application No. |
|---|---|
| | PCT/JP2016/066226 |

**A. CLASSIFICATION OF SUBJECT MATTER**
*G01B21/20*(2006.01)i

According to International Patent Classification (IPC) or to both national classification and IPC

**B. FIELDS SEARCHED**

Minimum documentation searched (classification system followed by classification symbols)
G01B21/00-21/32, G01B11/00-11/30, G01C3/00-3/06, G01C11/00-11/06,
G01C15/00

Documentation searched other than minimum documentation to the extent that such documents are included in the fields searched
Jitsuyo Shinan Koho          1922-1996    Jitsuyo Shinan Toroku Koho   1996-2016
Kokai Jitsuyo Shinan Koho    1971-2016    Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-70708 A (National University Corporation Chiba University), 09 May 2016 (09.05.2016), claims; paragraphs [0028], [0029] (Family: none) | 1-13 |
| A | JP 2010-145219 A (Toyota Central Research and Development Laboratories, Inc.), 01 July 2010 (01.07.2010), paragraphs [0047] to [0054] (Family: none) | 1-13 |
| A | JP 2016-4486 A (Ricoh Co., Ltd.), 12 January 2016 (12.01.2016), paragraphs [0074] to [0080] & US 2015/0371388 A1 paragraphs [0093] to [0099] | 1-13 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 09 August 2016 (09.08.16) | Date of mailing of the international search report 23 August 2016 (23.08.16) |
|---|---|
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (January 2015)

**INTERNATIONAL SEARCH REPORT**

| International application No. |
| --- |
| PCT/JP2016/066226 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2008/111452 A1 (Omron Corp.), 18 September 2008 (18.09.2008), entire text; all drawings & US 2010/0098324 A1 & EP 2133838 A1 & CN 101542520 A & KR 10-2009-0009824 A & JP 4508283 B | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012014259 A

**Non-patent literature cited in the description**

- **YONG ZHONG.** Intrinsic shape signatures: A shape descriptor for 3D object recognition. *IEEE, Proceedings of International Conference on Computer Vision Workshops,* 27 September 2009, 689-696
- Unique signatures of Histograms for local surface description. **FEDERICO TOMBARI et al.** Proceedings of the 11th European Conference on Computer Vision. Springer, 05 September 2010, 356-369
- Computer Vision and Image Media 3. Advanced Communication Media Co., Ltd, 08 December 2010, 36-37
- **TIMO ZINßER et al.** Point Set Registration with Integrated Scale Estimation. *Proceedings of the Eighth International Conference on Pattern Recognition and Image Processing,* 18 May 2005, 116-119